# EUROPÄISCHE PATENTANMELDUNG

(11) **EP 4 063 785 A1**
(43) Veröffentlichungstag der Anmeldung: **28.09.2022**
(21) Anmeldenummer: 22157895.8
(22) Anmeldetag: 22.02.2022
(51) Int. Cl.: G01C 9/06

(54) **NEIGUNGSSENSOR MIT NULLLAGENINDIKATION**

(30) Priorität: 25.03.2021 DE 102021107502
(71) Anmelder: Turck Holding GmbH, 58553 Halver (DE)
(72) Erfinder: Troska, Michael, 45968 Gladbeck (DE); Kirchhoff, Daniel, 44329 Dortmund (DE); Hellmuth, Christian, 58553 Halver (DE)
(74) Vertreter: DTS Patent- und Rechtsanwälte Schnekenbühl und Partner mbB

(57) **Zusammenfassung**

Die vorliegende Erfindung betrifft einen Neigungssensor (1) mit Nulllagenindikation zum Anzeigen einer vorbestimmten Nulllage, umfassend eine Indikationseinrichtung (10) mit einem optischen Indikationsmittel (15) und eine Steuereinheit (20) zum Ansteuern der Indikationseinrichtung (10). Dabei ist die Indikationseinrichtung (10) dazu eingerichtet, in der Nulllage ein festgelegtes erstes Signal (30) mittels eines optischen Indikationsmittels (15) auszusenden und in einer von der Nulllage abweichenden Lage ein festgelegtes zweites Signal (35) mittels des optischen Indikationsmittels (15) auszusenden. Dabei umfasst das zweite Signal (35) eine Information über das Maß der Abweichung der von der Nulllage abweichenden Lage und das optische Indikationsmittel (15) besteht aus nur einer Lichtquelle (16). Bei dem Verfahren zum Anzeigen einer vorbestimmten Nulllage wird eine aktuelle Lage relativ zu der vorbestimmten Nulllage erfasst wird; ein Steuersignal erzeugt und anhand des Steuersignals wird eine Indikationseinrichtung (10) mit einem optischen Indikationsmittel (15) so angesteuert, dass in der Nulllage ein festgelegtes erstes Signal (30) ausgesendet wird und in einer von der Nulllage abweichenden aktuellen Lage ein festgelegtes zweites Signal (35) ausgesendet wird. Dabei umfasst das zweite Signal (35) eine Information über das Maß der Abweichung der von der Nulllage abweichenden Lage und das optische Indikationsmittel (15) besteht aus nur einer Lichtquelle (16).

## Beschreibung

Die vorliegende Erfindung betrifft einen Neigungssensor mit Nulllagenindikation. Die Erfindung betrifft ferner ein Verfahren zum Anzeigen einer vorbestimmten Nulllage.

In vielen technischen Bereichen, etwa in der Automatisierung von Prozessen, ist eine genaue Kenntnis der Lage eines Elements oder Bauteils im Raum von essentieller Bedeutung. In diesem Zusammenhang sind Neigungssensoren bekannt, die eine beispielsweise über eine serielle Schnittstelle den Wert der Neigung relativ zu einer Referenzlage ausgeben können.

Dabei tritt immer wieder das Problem auf, dass solche Neigungssensoren sowie gegebenenfalls damit verbundene Elemente oder Bauteile bei ihrer Inbetriebnahme sehr aufwendig ausgerichtet werden müssen. Insbesondere muss dabei zunächst eine serielle Kommunikation zu einem Gerät zum Auslesen des Wertes aufgebaut werden, was einen erheblichen Aufwand bedeutet und entsprechende Hardware voraussetzt.

Ferner ist bei der Inbetriebnahme von Neigungssensoren, die ihre Nulllage über elektronische Analogsignale ausgeben, besondere Messausrüstung notwendig, um den Sensor in Nulllage zu bringen. Dies verkompliziert den Einsatz solcher Sensoren, zumal bei Neigungssensoren, welche die Neigung in mehreren Achsen erfassen, mehrere Messgeräte notwendig sind.

Es sind Versuche bekannt, die Ausgabe von Neigungswerten mittels nummerischer Displays oder durch eine Balken- oder Bargraph-Anzeige mit einer Reihe von Leuchtquellen zu lösen. Dies bedeutet ebenfalls einen erheblichen Zusatzaufwand.

Es ist die Aufgabe der vorliegenden Erfindung, Neigungssensoren und Verfahren zum Anzeigen einer vorbestimmten Nulllage so zu verbessern, dass unter anderem eine festgelegten Nulllage besonders einfach verifiziert werden kann, insbesondere bei einer Inbetriebnahme des Neigungssensors.

Diese Aufgabe wird erfindungsgemäß gelöst durch die Merkmale der unabhängigen Ansprüche. Vorteilhafte Ausgestaltungen sind in den Unteransprüchen angegeben.

Demnach wird die Aufgabe gelöst durch einen Neigungssensor mit Nulllagenindikation zum Anzeigen einer vorbestimmten Nulllage, wobei der Neigungssensor eine Indikationseinrichtung mit einem optischen Indikationsmittel und eine Steuereinheit zum Ansteuern der Indikationseinrichtung umfasst. Dabei ist die Indikationseinrichtung dazu eingerichtet, in der Nulllage ein festgelegtes erstes Signal mittels eines optischen Indikationsmittels auszusenden und in einer von der Nulllage abweichenden Lage ein festgelegtes zweites Signal mittels des optischen Indikationsmittels auszusenden. Dabei umfasst das zweite Signal eine Information über das Maß der Abweichung der von der Nulllage abweichenden Lage. Ferner besteht das optische Indikationsmittel aus nur einer Lichtquelle.

Die Grundidee der Erfindung liegt also darin, dass eine einzige Lichtquelle genutzt wird, um die Information auszugeben. Der Nutzer kann daher besonders leicht erfassen, ob eine aktuelle Lage der vorbestimmten Nulllage entspricht oder ob sie davon abweicht. Dabei wird die Abweichung auch quantitativ angegeben, da das zweite Signal eine Information über das Maß der Abweichung umfasst. Insbesondere ist daher das erste Signal optisch unterscheidbar vom zweiten Signal gebildet.

Insbesondere wird dabei ein Neigungssensor mit einem optischen Indikationsmittel aus nur einer Lichtquelle genutzt, um die Nulllage beziehungsweise eine Abweichung davon für eine bestimmte Neigungsachse anzuzeigen. Eine solche Neigungsachse kann einer Geräteachse entsprechen, etwa einer Längs- oder Querachse eines Bauteils oder Elements, an dem der Neigungssensor angebracht ist, um seine Neigung zu überwachen. Bei einem weiteren Beispiel könne mehrere Neigungssensoren mit je einer Lichtquelle zum Anzeigen der Nulllage für jeweils eine Neigungsachse vorgesehen und in eine gemeinsame Einheit integriert sein.

Im Unterschied zu einem bekannten Neigungssensor, der lediglich qualitativ anzeigt, ob die aktuelle Lage der Nulllage entspricht oder von dieser abweicht (binäre Anzeige), ist bei dem Neigungssensor der Erfindung leicht zu erfassen, wie weit die aktuelle Neigung quantitativ von der definierten Nulllage entfernt ist.

Die Erfindung macht es möglich, eine Annäherung an die Nulllage leicht zu erkennen, insbesondere während der Inbetriebnahme, sodass Installation und Ausrichtung vereinfacht werden.

Im Vergleich zu gewöhnlichen Wasserwagen werden ferner Risiken für die Umwelt und die Gesundheit eines Nutzers vermieden, wenn etwa die Flüssigkeit in einer Libelle ausläuft oder einfriert oder Glas zerbricht.

Anders als bei anderen Methoden, die Neigung zu messen, tritt bei dem Neigungssensor zudem kein Paralaxenfehler beim Ablesen auf. Solche Fehler sind sonst insbesondere bei nicht-elektronischen Methoden zu beachten.

Es wird ferner kein weiteres Zubehör benötigt, es entstehen keine zusätzlichen Fertigungskosten.

Der Neigungssensor nutzt nur eine einzelne Lichtquelle zur Ausgabe und kann daher ohne Fremdbeleuchtung bei Dunkelheit genutzt werden. Er kann ferner auch bei tiefen Temperaturen genutzt werden, die etwa den Einsatz von bestimmten Displays, LCDs oder Flüssigkeitslibellen erschweren. Die mittels der Lichtquelle ausgesendeten Signale können zudem auch aus größerem Abstand visuell erfasst und quantitativ bewertet werden, wogegen beispielsweise ein Display unter solchen Bedingungen nur schwer abzulesen ist, insbesondere bei Dunkelheit.

Bei einer Ausbildung ist die Information über das Maß der Abweichung von der Nulllage in Form einer Blinkfrequenz und/oder einer Farbe und/oder eines variablen Tastverhältnisses und/oder eines Helligkeitseindrucks des optischen Indikationsmittels bereitgestellt. Das Signal kann dadurch vorteilhafterweise einfach und intuitiv von einem Nutzer erfasst und interpretiert werden.

Insbesondere ist der optische oder optoelektronische Parameter des optischen Indikationsmittels bei dem zweiten Signal so gewählt, dass eine quantitative Änderung des Parameters durch das Auge eines Nutzers wahrnehmbar ist. Beispielsweise kann der Parameter je nach dem anzuzeigenden Maß der Abweichung stufenweise oder kontinuierlich veränderlich sein.

Das erste Signal kann beispielsweise ein durchgehendes Leuchten des optischen Indikationsmittels umfassen, insbesondere mit einer bestimmten Helligkeit. Das erste Signal kann ferner durch ein ausbleibendes Leuchten, insbesondere einen Dunkelzustand der Lichtquelle, ausgegeben werden.

Das zweite Signal kann beispielsweise ein Blinken des optischen Indikationsmittels umfassen, insbesondere ein periodische Wechseln zwischen verschiedenen Helligkeiten oder zwischen An- und Aus-Zuständen des optischen Indikationsmittels. Die Blinkfrequenz kann dann mit dem Maß der Abweichung veränderlich sein, etwa umso höher, je stärker die aktuelle Lage von der Nulllage abweicht.

Bei einer Ausbildung der Erfindung kann dabei das zweite Signal in Abhängigkeit vom Betrag der Abweichung gebildet wird. Das heißt, das zweite Signal unterscheidet sich je nachdem, wie stark die aktuelle Lage von der vorbestimmten Nulllage abweicht. Beispielsweise kann das zweite Signal unterschiedlich gebildet werden je nachdem, ob die aktuelle Lage relativ zur vorbestimmten Nulllage mehr oder weniger stark gekippt ist. Das zweite Signal kann dabei unabhängig von der Richtung der Abweichung von der Nulllage gebildet sein, sodass die Abweichung nur ihrem Betrag nach ausgegeben wird.

Bei einem Beispiel leuchtet die Lichtquelle dauerhaft, wenn die aktuelle Lage der vorbestimmten Nulllage entspricht, und blinkt mit einer umso niedrigerer Frequenz, je weiter die aktuelle Lage von der vorbestimmten Nulllage abweicht. Bei weiteren Beispielen kann ein anderer Zusammenhang zwischen dem Blinken der Lichtquelle und der quantitativen Abweichung von der vorbestimmten Nulllage vorgesehen sein, etwa eine mit wachsender Abweichung zunehmende Blinkfrequenz, oder eine andere Modulation des Blinksignals.

Ferner kann die Ausgabe des ersten und/oder zweiten Signals akustisch erfolgen, wobei auch hier das Maß der Abweichung - insbesondere Richtung und/oder Betrag - mittels eines akustischen Parameters ausgegeben werden kann, etwa durch eine Lautstärke, eine Frequenz der akustischen Schwingung und/oder eines akustischen Signals.

Bei einer anderen Ausbildung kann vorgesehen sein, dass das zweite Signal in Abhängigkeit von der Richtung der Abweichung von der vorbestimmten Nulllage gebildet wird. Insbesondere kann dabei die von dem zweiten Signal umfasste Information über das Maß der Abweichung sowohl die Richtung als auch den Betrag der Abweichung betreffen. Beispielsweise kann das optische Indikationsmittel verschiedene Farben je nach Richtung der Abweichung aufweisen, wobei zusätzlich eine Blinkfrequenz vom Betrag der Abweichung abhängt.

Insbesondere ist dabei vorgesehen, dass die aktuelle Lage mittels eines Sensorelements erfasst wird. Das Sensorelement kann dabei von dem Neigungssensor umfasst sein oder mit ihm in datentechnischer Verbindung stehen. Insbesondere ist das Sensorelement dabei dazu eingerichtet, eine aktuelle Lage zu erfassen, etwa relativ zu der vorbestimmten Nullage.

Beispielsweise kann die Neigung als Maß einer Rotation beziehungsweise eines Kippens um eine bestimmte Neigungsachse im Raum erfasst werden. Dieses Maß der Rotation kann einen Betrag umfassen, der etwa in Grad angegeben werden kann. Es kann ferner eine Richtung umfassen, wobei insbesondere zwei einander entgegengesetzte Richtungen der Rotation um die Achse möglich sind.

Die Nulllage kann dabei relativ zu genau einer Rotationsachse definiert sein; der Neigungssensor kann dann Abweichungen von der Nulllage in zwei zueinander entgegengesetzten Richtungen anzeigen. In weiteren Beispielen kann auch vorgesehen sein, dass die Nulllage als Ausrichtung in einer bestimmten Ebene definiert ist, die durch zwei zueinander senkrecht verlaufende Rotationsachsen aufgespannt wird; der Neigungssensor kann dann Abweichungen von der Nulllage durch Kippen um diese beiden Achsen anzeigen.

Der Neigungssensor umfasst insbesondere genau eine Lichtquelle zum Anzeigen der Nulllage beziehungsweise der Abweichung von der vorbestimmten Nulllage. Insbesondere bezieht sich dabei die Anzeige mittels der Lichtquelle auf die Neigung um eine bestimmte Neigungsachse, insbesondere eine relativ zu dem Neigungssensor feste Neigungsachse.

Bei einer weiteren Ausbildung ist die Lichtquelle eine Leuchtdiode (light emitting diode, LED). Alternativ oder zusätzlich kann statt einer LED auch ein anderes selbstleuchtendes Anzeigeelement genutzt werden.

Als eine einzelne Lichtquelle können auch mehrere Elemente verstanden werden, die zur Erreichung eines gemeinsamen Beleuchtungseindrucks angesteuert werden. Solche Elemente können beispielweise in einer gemeinsamen Baugruppe oder auf einer einzigen Platine integriert sein und gemeinsam in gleicher Weise angesteuert werden.

Die vorbestimmte Nulllage kann beispielsweise relativ zum Schwerefeld der Erde so definiert sein, dass sie einer waagrechten oder vertikalen Lage entspricht. In diesem Fall ist die vorbestimmte Nulllage parallel oder senkrecht zum Verlauf des Schwerefeldes der Erde.

Bei einer Ausbildung ist eine beliebige Lage als vorbestimmte Nulllage frei definierbar, insbesondere eine von der waagrechten oder vertikalen Richtung abweichende Lage. Der Neigungssensor der Erfindung ist damit unabhängig von der Richtung der Erdbeschleunigung einsetzbar, das heißt, er ist nicht an einen waagrechten "Horizont" oder eine vertikale Richtung im Schwerefeld gebunden. Vielmehr kann die Nulllage praktisch beliebig definiert werden.

Hierzu kann beispielsweise eine Schnittstelle vorgesehen sein, über die eine Eingabe eines gewünschten Wertes zum Definieren der vorbestimmten Nulllage erfassbar ist.

Bei einem weiteren Beispiel kann die vorbestimmte Nulllage vorgegeben werden, indem der Neigungssensor beziehungsweise sein Sensorelement in die gewünschte Nulllage gebracht wird und bestätigt wird, dass es sich hierbei um die vorbestimmte Nulllage handelt. Diese wird dann gespeichert und bei künftigen Messungen wird eine Abweichung von dieser vorbestimmten Nulllage erfasst und gegebenenfalls das Maß der Abweichung ausgegeben.

Bei einer weiteren Ausbildung ist eine vorbestimmte Nulllage durch Auswählen aus einer Mehrzahl vorbestimmter Lagen auswählbar. Beispielsweise können verschiedene vorgegebene Lagen in einem Menü oder eine Tabelle angeboten werden, etwa über eine Schnittstelle oder eine mit dem Neigungssensor gekoppelte Anzeige- oder Ausgabeeinheit. Die Auswahl erfolgt beispielsweise durch eine Nutzereingabe.

Zum Beispiel kann ein Schalter vorgesehen sein, durch dessen Betätigung die vorgegebenen Werte einer Liste in einer vorgegebenen Reihenfolge jeweils als Nulllage definiert werden; dabei kann auch eine Ausgabe der aktuell definierten Nulllage vorgesehen sein.

Bei einem Beispiel mit zwei vorgegebenen und auswählbaren Nulllagen kann beispielsweise durch Betätigen eines Schalters zwischen einer waagrechten und einer vertikalen Nulllage umgeschaltet werden.

Bei einer weiteren Ausbildung umfasst der Neigungssensor ferner ein Anzeigeelement zum Ausgeben des Maßes der Abweichung von der Nulllage mittels alphanumerischer Zeichen. Der Nutzer kann dabei vorteilhafterweise besonders genau erkennen, in welchem Maß die aktuelle Lage von der Nulllage abweicht. Insbesondere ist genau ein optisches Indikationsmittel mit genau einer Lichtquelle in Kombination mit dem alphanumerischen Anzeigeelement vorgesehen.

Bei einer Ausbildung umfasst der Neigungssensor ferner eine Schnittstelle zum datentechnischen Verbinden mit einem externen Gerät, insbesondere mittels einer IO-Link-Verbindung oder eines anderen Verfahrens. Dadurch können vom Neigungssensor erfasste Daten vorteilhafterweise an das externe Gerät übertragen werden und/oder der Neigungssensor kann mittels des externen Geräts konfiguriert werden. Zum Beispiel kann das externe Gerät genutzt werden, um die Nulllage zu definieren, insbesondere über eine durch das externe Gerät bereitgestellte Bedienoberfläche und/oder mittels von dem externen Gerät erfassten Eingabedaten.

Sofern der Neigungssensor über eine digitale Kommunikations-Schnittstelle verfügt, etwa mittels IO-Link oder über ein vergleichbares Protokoll, so kann eine beliebige Lage als "Nulllage" des Neigungssensors definiert werden.

Zum Beispiel kann die vorbestimmte Nulllage schräg gegenüber der Waagerechten oder Senkrechten definiert werden, sodass der Nutzer ohne die Nulllagenindikation nicht leicht abschätzen kann, ob eine Neigung der Nulllage entspricht oder wie weit sie davon abweicht. In solchen Fällen hat der Neigungssensor der Erfindung den besonderen Vorteil, dass die aktuelle Differenz zur Nulllage einfach für den Nutzer erfassbar ist, selbst wenn er die Nulllage zunächst nicht kennt.

Der Neigungssensor kann zur elektrischen Energieversorgung einen Energiespeicher umfassen, etwa eine Batterie, oder es kann ein Anschluss an eine externe elektrische Energieversorgung vorgesehen sein.

Die Erfindung betrifft ferner eine Sensorvorrichtung mit zumindest zwei Neigungssensoren gemäß der vorliegenden Beschreibung. Dabei sind die Neigungssensoren zum Anzeigen einer vorbestimmten Nulllage entlang jeweils eines Freiheitsgrads ausgebildet sind.

Das heißt zum Beispiel, die Sensorvorrichtung zeigt mittels einer ersten Lichtquelle eine vorbestimmte Nulllage beziehungsweise eine Abweichung davon relativ zu einer ersten Neigungsachse an. Sie zeigt ferner mittels einer zweiten Lichtquelle eine vorbestimmte Nulllage beziehungsweise eine Abweichung davon relativ zu einer zweiten Neigungsachse an. Dabei können die erste und die zweite Neigungsachse aufeinander senkrecht stehen. Bei einem weiteren Beispiel kann die Sensorvorrichtung eine dritte Lichtquelle umfassen, mittels derer eine vorbestimmte Nulllage beziehungsweise eine Abweichung davon relativ zu einer dritten Neigungsachse angezeigt wird. Auch die dritte Neigungsachse kann dabei senkrecht zur ersten und/oder zweiten Neigungsachse verlaufen.

Es kann ein gemeinsames Sensorelement verwendet werden, um die Neigung um eine oder mehrere Neigungsachsen zu erfassen. Beispielsweise kann ein 3-Achsen Beschleunigungssensorelement (MEMS) genutzt werden. Dieses umfasst eine schwingende Masse, deren Schwingung durch Beschleunigungen wie die Erdbeschleunigung beeinflusst wird. Verschiedene Sensorkomponenten im Sensorelement erfassen diese Schwingung, beispielsweise relativ zu drei senkrecht zueinander ausgerichteten Achsen. Das Sensorelement kann dann diese drei Komponenten in Form von drei Beschleunigungswerten ausgeben und hieraus kann die aktuelle Lage des Gerätes bestimmt werden. Dabei werden etwa bei einem 1-Achsen Neigungssensor die drei Komponenten rechnerisch auf eine bestimmte Neigungsachse projiziert, bei einem 2-Achsen Neigungssensor werden die drei Komponenten auf zwei Achsen, projiziert, insbesondere eine Nick- und eine Rollachse des Gerätes. Pro verwendeter Geräteachse wird eine Lichtquelle verwendet, um die Neigung relativ zu einer jeweils vorgegebenen nulllage anzuzeigen.

Eine solche Sensorvorrichtung kann dazu verwendet werden, eine Ausrichtung entlang einer Ebene zu überprüfen und Abweichungen davon quantitativ auszugeben. Die vorbestimmte Nulllage ist in diesem Fall entlang zweier Achsen oder Richtungen definiert, die insbesondere senkrecht zueinander ausgerichtet sind und die Ebene aufspannen, in welcher sich die Nulllage befindet.

Die zumindest zwei Neigungssensoren der Sensorvorrichtung weisen jeweils genau eine Lichtquelle auf, wobei die Unterscheidung durch verschiedene Lichtparameter erleichtert werden kann, etwa verschiedene Farben für die Lichtquellen zur Ausgabe von Abweichungen in verschiedene Richtungen.

Insbesondere sind die Neigungssensoren dabei in ein gemeinsames Gehäuse integriert.

Es kann also vorgesehen sein, dass ein Gerät einen oder mehrere Neigungssensoren umfasst, die insbesondere in einem gemeinsamen Gehäuse angeordnet sind. Dabei umfasst jeder Neigungssensor eine Lichteinheit, insbesondere zum Anzeigen der Nulllage oder einer Abweichung davon relativ zu einer Neigungsachse des Geräts. Zum Erfassen der Neigung können die Neigungssensoren ein gemeinsames Sensorelement oder mehrere separate Sensorelemente als physikalischen Sensor nutzen.

Bei dem Verfahren zum Anzeigen einer vorbestimmten Nulllage wird eine aktuelle Lage relativ zu der vorbestimmten Nulllage erfasst, etwa mittels eines Sensorelements. Es wird ein Steuersignal erzeugt, beispielsweise durch eine Steuereinheit, und anhand des Steuersignals wird eine Indikationseinrichtung mit einem optischen Indikationsmittel so angesteuert, dass in der Nulllage ein festgelegtes erstes Signal ausgesendet wird und in einer von der Nulllage abweichenden aktuellen Lage ein festgelegtes zweites Signal ausgesendet wird. Dabei umfasst das zweite Signal eine Information über das Maß der Abweichung der von der Nulllage abweichenden Lage. Dabei besteht das optische Indikationsmittel aus nur einer Lichtquelle.

Das Verfahren ist insbesondere geeignet, den oben erläuterten Neigungssensor zu betreiben. Es weist daher die gleichen Vorteile auf wieder der Neigungssensor und es kann in analoger Weise weitergebildet werden.

Weitere Einzelheiten und Vorteile der Erfindung sollen nun anhand eines in den Zeichnungen dargestellten Ausführungsbeispiels näher erläutert werden.

Es zeigen:
- Fig. 1: eine schematische Darstellung des Neigungssensors; und
- Fig. 2: ein Beispiel für ein erstes und ein zweites Signal.

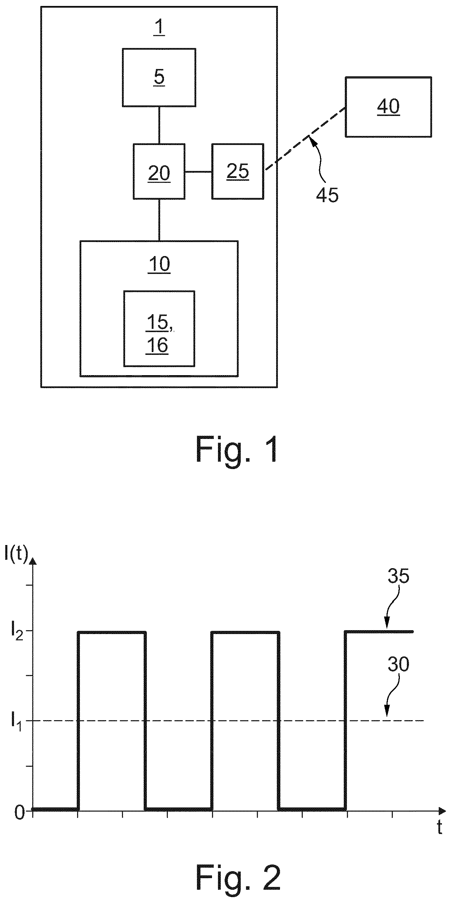

Mit Bezug zu Fig. 1 wird eine schematische Darstellung des Neigungssensors erläutert.

Der Neigungssensor 1 umfasst ein Sensorelement 5.

Er umfasst ferner eine Steuereinheit 20, bei dem Beispiel einen Prozessor.

Er umfasst zudem eine optische Indikationseinrichtung 10.

Die Indikationseinrichtung 10 umfasst ein Indikationsmittel 15.

Das Indikationsmittel 15 besteht bei dem Ausführungsbeispiel aus einer Lichtquelle 16, nämlich einer LED 16.

Der Neigungssensor 1 umfasst ferner eine Schnittstelle 25.

Mit der Steuereinheit 20 sind das Sensorelement 5 und die optische Indikationseinrichtung 10 gekoppelt.

Dabei ist die Steuereinheit 20 dazu eingerichtet, von dem Sensorelement 5 erfasste Sensordaten zu empfangen.

Die Steuereinheit 20 ist ferner dazu eingerichtet, die Indikationseinrichtung 10 anzusteuern.

Das Ansteuern der Indikationseinrichtung 10 erfolgt insbesondere anhand der empfangenen Sensordaten. Beispielsweise erzeugt die Steuereinheit 20 Steuerdaten, die an die Indikationseinrichtung 10 übertragen werden und in Abhängigkeit von denen die Lichtquelle 16 einen bestimmten Leuchtzustand einnimmt.

Ferner ist die Schnittstelle 25 mit der Steuereinheit 20 gekoppelt.

Die Schnittstelle ist bei dem Ausführungsbeispiel so ausgebildet, dass eine datentechnische Verbindung 45 zu einem externen Gerät 40 herstellbar ist. Über die datentechnische Verbindung 45 können Daten ausgetauscht werden.

Bei dem Ausführungsbeispiel besteht eine IO-Link-Verbindung 45 zwischen der Schnittstelle 25 des Neigungssensors 1 und dem externen Gerät 40, welches hier als IO-Link-Master 40 ausgebildet ist: Der Neigungssensor 1 ist in diesem Beispiel als IO-Link-Device konfiguriert Andere Konfigurationen, Protokolle und Verbindungsverfahren können vorgesehen sein, insbesondere alle kabelgebundenen oder kabellosen datentechnischen Verbindungen.

Bei einem weiteren Beispiel erfolgt die Verbindung 45 zwischen dem Neigungssensor 1 und dem externen Gerät 40 mittels einer "single pair ethernet"-Verbindung (SPE).

Über die Verbindung 45 kann auch eine elektrische Energieversorgung des Neigungssensors 1 bereitgestellt werden.

Bei weiteren Beispielen kann ein weiterer Anschluss für eine externe Energieversorgung vorgesehen sein oder der Neigungssensor 1 kann eine Batterie umfassen.

Mit Bezug zu den Fig. 1 und 2 wird nachfolgend ein Ausführungsbeispiel des Verfahrens zum Anzeigen einer vorbestimmten Nulllage beziehungsweise einer Abweichung von der vorbestimmten Nulllage erläutert. Dabei wird von dem oben erläuterten Ausführungsbeispiel des Neigungssensors 1 ausgegangen, welches näher spezifiziert wird.

Das Sensorelement 5 erfasst eine aktuelle Lage, das heißt eine aktuelle Neigung. Die Erfassung erfolgt bei dem Ausführungsbeispiel so, dass die Neigung um eine bestimmte Achse erfasst wird. Es werden Sensordaten mit Informationen über die aktuelle Neigung erzeugt und an die Steuereinheit 20 übertragen.

Die aktuelle Lage wird bei diesem Beispiel als Abweichung von einer vorbestimmten Nulllage erfasst, die als Referenzlage beziehungsweise als Referenzneigung dient. Bei dem Ausführungsbeispiel wird die Abweichung von der vorbestimmten Nulllage dem Betrag nach erfasst. Bei weiteren Ausführungsbeispielen wird zudem die Richtung der Abweichung erfasst.

Mittels der Steuereinheit 20 wird anhand der empfangenen Sensordaten ein Steuersignal erzeugt und an die optische Indikationseinrichtung 10 übertragen.

Bei weiteren Ausführungsbeispielen werden Informationen über die erfasste Neigung mittels der Schnittstelle 25 und über die datentechnische Verbindung 45 an das externe Gerät 45 übertragen beziehungsweise sie können von dem externen Gerät abgerufen werden.

Die optische Indikationseinrichtung 10 empfängt das Steuersignal. Anhand des Steuersignals wird die Indikationseinrichtung 10 so angesteuert, dass die Lichtquelle 16 einen bestimmten Leuchtzustand einnimmt.

Die Indikationseinrichtung 10 mit dem optischen Indikationsmittel 15 wird dabei so angesteuert, dass mittels der Lichtquelle 16 ein festgelegtes erstes Signal 30 ausgesendet wird, wenn die erfasste aktuelle Lage der vorbestimmten Nulllage entspricht. Dabei ist eine bestimmte Toleranz vorgegeben, etwa zwischen 0,1° und 2°, bevorzugt 0,5°, innerhalb derer Abweichungen von der vorbestimmten Nulllage toleriert werden.

Weicht die erfasste aktuelle Lage dagegen von der Nulllage ab, so wird ein festgelegtes zweites Signal 35 ausgesendet. Dabei umfasst das zweite Signal 35 eine Information über das Maß der Abweichung von der Nulllage.

Dabei besteht das optische Indikationsmittel 15 aus nur einer einzigen Lichtquelle 16. Bei weiteren Ausführungsbeispielen kann die Lichtquelle 16 mehrere Leuchtelemente umfassen, die jedoch einen für den Nutzer nicht voneinander unterscheidbaren Lichteindruck erzeugen. Beispielsweise kann eine Lichtquelle 16 verschiedenfarbig leuchtende Schichten oder Leuchtelemente umfassen, um die Farbe des von der Lichtquelle 16 ausgestrahlten Lichts steuern zu können.

In Fig. 2 sind beispielhaft ein erstes 30 und zweites Signal 35 schematisch dargestellt. In einem Graphen ist die Intensität I(t) des von der Lichtquelle 16 ausgestrahlten Lichts in Abhängigkeit von der Zeit t aufgetragen. Bei dem ersten Signal 30 leuchtet die Lichtquelle 16 dauerhaft mit einer Intensität I₁. Bei dem zweiten Signal 35 blinkt die Lichtquelle 16, wobei sie periodisch zwischen einer Intensität I von 0 und einer weiteren Intensität I₂ hin und her springt, die Lichtquelle 16 wird also periodisch an- und ausgeschaltet. Bei einem weiteren Beispiel sind die Intensitäten I₁, I₂ für das erste 30 und zweite Signal 35 identisch.

Das zweite Signal 35 wird ferner in Abhängigkeit von der erfassten Abweichung von der Nulllage ausgebildet. Bei dem Ausführungsbeispiel ist die Blinkfrequenz umso höher, je näher die aktuelle Lage der vorbestimmten Nulllage kommt; beim Erreichen der Nulllage geht das zweite 35 in das erste Signal 30 über und die Lichtquelle 16 leuchtet durchgehend. Dabei kann eine bestimmte Toleranz vorgesehen sein, innerhalb welcher die Nulllage als erreicht gewertet wird, beispielsweise +/- 0,5°. Bei einem weiteren Ausführungsbeispiel blinkt die Lichtquelle 16 mit einer umso größeren Frequenz, je weiter die aktuelle Lage von der Nulllage entfernt ist.

Bei einem weiteren Ausführungsbeispiel leuchtet die Lichtquelle 16 alternativ oder zusätzlich umso heller, je größer die Abweichung der aktuellen Lage von der Nulllage ist.

Bei einer weiteren Ausbildung leuchtet die Lichtquelle 16 in verschiedenen Farben, je nach der Richtung der Abweichung von der Nulllage.

Bei einem weiteren Ausführungsbeispiel kann vorgesehen sein, dass die Ausgabe des Neigungssensors 1 mit der Lichtquelle 16 bei einer Änderung der aktuellen Lage oder auf eine Bedienhandlung hin aktiviert wird. Ferner kann ein Time-Out festgelegt sein, beispielsweise 5 bis 60 Sekunden, bevorzugt 10 Sekunden, wobei die Ausgabe mittels der Lichtquelle 16 beendet wird, wenn während dieser Zeitdauer keine Änderung der Neigung erfasst wird.

Nachfolgend wird ein weiteres Ausführungsbeispiel beschrieben, wie der oben erläuterte Neigungssensor 1 eingesetzt werden kann.

Bei einem Beispiel wird der Neigungssensor 1 in Betrieb genommen, insbesondere zusammen mit einem Maschinenelement, welches mit dem Neigungssensor 1 verbunden ist, wobei der Nutzer die vorgegebene Nulllage auffinden soll. Bei dieser Inbetriebnahme wird der Nutzer durch die Anzeige der Nulllage beziehungsweise der Abweichung von der Nulllage unterstützt.

Die Sensoreinheit 5 des Neigungssensors 1 erfasst dabei die Neigung bezüglich einer definierten Neigungsachse.

Bei weiteren Ausführungsbeispielen sind mehrere Neigungssensoren 1 in eine Sensorvorrichtung integriert, wobei die Neigungssensoren 1 verschiedenen Neigungsachsen zugeordnet sind. Insbesondere können zwei Neigungssensoren 1 zwei zueinander senkrecht verlaufenden Neigungsachsen zugeordnet sein.

Dabei können die mehreren Neigungssensoren 1 auf das gleiche Sensorelement 5 zum Erfassen der Neigung zurückgreifen, etwa eine Mehrachsen-MEMS-Zelle. Bei einem weiteren Ausführungsbeispiel können mehrere Sensorelemente 5 vorgesehen sein.

Bei dem Ausführungsbeispiel ist vorgesehen, dass eine gemeinsame Steuereinheit 20 genutzt wird, um mittels mehrerer Indikationseinrichtungen 10, insbesondere mittels mehrere Lichtquellen 16, die Neigung um jeweils eine Neigungsachse eines Geräts, etwa Dreh-, Roll- oder Nickachse, auszugeben. Die Ansteuerung der Indikationseinrichtungen 10 kann dabei beispielsweise über separate Anschlüsse und/oder Software-module der gemeinsamen Steuereinheit 20 erfolgen.

Die Lichtquelle 16 ist bei dem Ausführungsbeispiel eine gelbe LED 16, mittels derer die Nulllagenindikation dargestellt wird. Die LED 16 blinkt mit zunehmender Frequenz, je mehr sich die erfasste aktuelle Lage der Nulllage nähert. Sie leuchtet dauerhaft, wenn sich die Lage des Neigungssensors 1 in einem Fenster von ±0,5° um die vorbestimmte Nulllage befindet.

Bei dem Beispiel weist der Neigungssensor1 eine digitale Kommunikations-Schnittstelle 25 auf, über die das externe Gerät 40 mittels einer IO-Link-Verbindung angeschlossen ist. Das externe Gerät 40 kann nun genutzt werden, beispielsweise im Rahmen einer Konfiguration eine bestimmte Lage als vorgegebene Nulllage festzulegen.

Für die elektrische Energieversorgung des Neigungssensors 1 kann ein Netzteil oder eine Batterie genutzt werden. Die Energieversorgung kann bei weiteren Beispielen auch über die Schnittstelle 25 erfolgen.

### Bezugszeichenliste

- 1: Neigungssensor
- 5: Sensorelement
- 10: Indikationseinrichtung
- 15: Indikationsmittel
- 16: Lichtquelle (LED)
- 20: Steuereinheit
- 25: Schnittstelle
- 30: erstes Signal
- 35: zweites Signal
- 40: externes Gerät; IO-Link-Master
- 45: datentechnische Verbindung; IO-Link-Verbindung
- I: Intensität
- I₁: Intensität (erstes Signal)
- I₂: Intensität (zweites Signal)
- t: Zeit

## Patentansprüche

1. Neigungssensor (1) mit Nulllagenindikation zum Anzeigen einer vorbestimmten Nulllage; umfassend
eine Indikationseinrichtung (10) mit einem optischen Indikationsmittel (15); und
eine Steuereinheit (20) zum Ansteuern der Indikationseinrichtung (10); wobei die Indikationseinrichtung (10) dazu eingerichtet ist, in der Nulllage ein festgelegtes erstes Signal (30) mittels eines optischen Indikationsmittels (15) auszusenden und in einer von der Nulllage abweichenden Lage ein festgelegtes zweites Signal (35) mittels des optischen Indikationsmittels (15) auszusenden;
wobei das zweite Signal (35) eine Information über das Maß der Abweichung der von der Nulllage abweichenden Lage umfasst; und
wobei das optische Indikationsmittel (15) aus nur einer Lichtquelle (16) besteht.

2. Neigungssensor (1) nach Anspruch 1, wobei die Information über das Maß der Abweichung von der Nulllage in Form einer Blinkfrequenz und/oder einer Farbe und/oder eines variablen Tastverhältnisses und/oder eines Helligkeitseindrucks des optischen Indikationsmittels (15) bereitgestellt ist.

3. Neigungssensor (1) nach einem der vorhergehenden Ansprüche, wobei die eine Lichtquelle (16) eine LED ist.

4. Neigungssensor (1) nach einem der vorhergehenden Ansprüche, wobei als vorbestimmte Nulllage eine Lage frei definierbar ist, die von einer relativ zum Schwerefeld der Erde senkrechten oder parallelen Lage abweicht.

5. Neigungssensor (1) nach einem der vorhergehenden Ansprüche, wobei eine vorbestimmte Nulllage durch Auswählen aus einer Mehrzahl vorbestimmter Lagen auswählbar ist.

6. Neigungssensor (1) nach einem der vorhergehenden Ansprüche, ferner umfassend ein Anzeigeelement zum Ausgeben des Maßes der Abweichung von der Nulllage mittels alphanumerischer Zeichen.

7. Neigungssensor (1) nach einem der vorhergehenden Ansprüche, ferner umfassend eine Schnittstelle (25) zum datentechnischen Verbinden mit einem externen Gerät (40), insbesondere mittels einer IO-Link-Verbindung (45).

8. Sensorvorrichtung mit zumindest zwei Neigungssensoren (1) nach einem der vorhergehenden Ansprüche, wobei die Neigungssensoren (1) zum Anzeigen einer vorbestimmten Nulllage entlang jeweils eines Freiheitsgrads ausgebildet sind, wobei die Neigungssensoren (1) insbesondere in ein gemeinsames Gehäuse integriert sind.

9. Verfahren zum Anzeigen einer vorbestimmten Nulllage; wobei eine aktuelle Lage relativ zu der vorbestimmten Nulllage erfasst wird; ein Steuersignal erzeugt wird; und
anhand des Steuersignals eine Indikationseinrichtung (10) mit einem optischen Indikationsmittel (15) so angesteuert wird, dass in der Nulllage ein festgelegtes erstes Signal (30) ausgesendet wird und in einer von der Nulllage abweichenden aktuellen Lage ein festgelegtes zweites Signal (35) ausgesendet wird;
wobei das zweite Signal (35) eine Information über das Maß der Abweichung der von der Nulllage abweichenden Lage umfasst; und wobei das optische Indikationsmittel (15) aus nur einer Lichtquelle (16) besteht.
